Europäisches Patentamt

European Patent Office

Office européen des brevets

(11) Publication number: **0 275 925 B1**

## EUROPEAN PATENT SPECIFICATION

(45) Date of publication of patent specification: **05.04.95**

(51) Int. Cl.6: **C08F  210/18**, C08F 4/68, C08L 23/16

(21) Application number: **88100450.1**

(22) Date of filing: **14.01.88**

The file contains technical information submitted after the application was filed and not included in this specification

(54) **Rubbery copolymers of ethylene, propylene and a nonconjugated polyene and their use.**

(30) Priority: **19.01.87 JP 10914/87**
**18.02.87 JP 36757/87**
**31.03.87 JP 80787/87**
**30.04.87 JP 109507/87**
**18.09.87 JP 235451/87**

(43) Date of publication of application:
**27.07.88 Bulletin  88/30**

(45) Publication of the grant of the patent:
**05.04.95 Bulletin  95/14**

(84) Designated Contracting States:
**DE FR GB IT**

(56) References cited:
**EP-A- 0 094 051**
**GB-A- 1 192 770**
**US-A- 59 034**

(73) Proprietor: **SUMITOMO CHEMICAL COMPANY, LIMITED**
**Kitahama 4-chome 5-33**
**Chuo-ku**
**Osaka 541 (JP)**

(72) Inventor: **Takao, Hiroyoshi**

**7-16, Kurosunadai-3-chome**
**Chiba-shi (JP)**
Inventor: **Harada, Hiroyuki**
**1353-4, Shiizu**
**Ichihara-shi (JP)**
Inventor: **Sugimori, Kiyoyuki**
**18-4, Sakuradai-3-chome**
**Ichihara-shi (JP)**
Inventor: **Yoshida, Nobuyuki**
**19-4, Aobadai-4-chome**
**Ichihara-shi (JP)**
Inventor: **Fukuyama, Masahiro**
**98, Daijuku**
**Sodegauramachi**
**Kimitsu-gun**
**Chiba-ken (JP)**
Inventor: **Yamada, Hideaki**
**20-10, Sakuradai 3-chome**
**Ichihara-shi (JP)**
Inventor: **Koshiba, Junichi**
**135, Iriyamazu**
**Ichihara-shi (JP)**

(74) Representative: **VOSSIUS & PARTNER**
**Postfach 86 07 67**
**D-81634 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 275 925 B1

## Description

The present invention relates to the technical field of rubbery copolymers of ethylene, propylene and a nonconjugated polyene and to vulcanizable rubber compositions comprising such copolymers.

Concerning rubbery copolymers of ethylene, an $\alpha$-olefin and a nonconjugated polyene, a number of proposals have already been made. In particular rubbery copolymers consisting of ethylene, propylene and a nonconjugated polyene are very interesting from a technical point of view.

According to the prior art, the rubbery region of this type of copolymers is mostly constituted of a material wherein the molar ratio of ethylene/propylene is 85/15 or below.

However, such ethylene/propylene/nonconjugated polyene copolymers have insufficient strength and their vulcanized products are insufficient in strength and hardness, so that they have not been used in fields requiring high performance (strength) and high hardness.

It has generally been believed that copolymers having too high an ethylene content, i.e. those of which the molar ratio of ethylene/propylene exceeds 85/15, are disadvantageous in that they form a solvent-insoluble gel in the process of polymerization and, even if they give a copolymer, the copolymer is rigid, poor in elasticity and inferior in strength (for example, see: Japanese Patent Application Kokai (Laid-Open) Nos. 55-137,112 and 55-137,113).

EP-A-59034 describes a catalyst system for a process for producing copolymers of ethylene with $\alpha$-olefins, including copolymers of ethylene, $\alpha$-olefins and a linear or cyclic diene or higher polyene having non-conjugated double bonds. Although the description states that the process disclosed therein enables solution copolymerization to be carried out in a conventional solvent in which the copolymer is soluble to produce a copolymer having an ethylene content as high as 90 mol%, the working examples and the comparative examples all have ethylene to propylene molar ratios less than 1:1.

EP-A-94051 describes an ethylene/$\alpha$-olefin/polyene random copolymer rubber in which the ethylene/$\alpha$-olefin molar ratio is said to fall within the range from 55/45 to 95/5. Page 3, line 34-37, however, state that the molar ratio of ethylene/$\alpha$-olefin is desirably within the range from 60/40 to 85/15 and the six working examples have molar ratios of ethylene to propylene of 58:42 or less when the weight percent figures are converted to mole percent and the ratio of mole percent is calculated for each example.

GB-A-1192770 describes a process for the manufacture of a copolymer comprising 21.5% to 75% by weight ethylene units, 75% to 21.5% by weight propylene units and 2.0% to 3.5% by weight of a 5-ethylidene-2-norbornene, in the presence of a specific catalyst system. When the molar ratio of ethylene to propylene in the copolymer is calculated based upon the maximum weight percent ethylene units and the minimum weight percent propylene units according to the disclosed ranges of amounts, one finds that the maximum molar ratio of ethylene to propylene is 68/14.

Further, it is known that rubbery ethylene-propylene copolymers containing no polyene are desirable for use in fields requiring high heat resistance. However, these copolymers are disadvantageous in that they cannot be sufficiently crosslinked with organic peroxides and the like in the presence of steam or air.

Further, since these rubbery ethylene-propylene copolymers have no polar group in their main chain, they have insufficient oil resistance. Thus, no processes are known that give rubbery ethylene-propylene copolymers capable of solving all the above-mentioned problems.

As compared with sulfur vulcanized rubber products rubber products crosslinked with an organic peroxide (hereinafter simply referred to as peroxide) exhibit excellent thermal aging resistance, low compression set, low staining on metallic and coated surfaces and they are capable of giving a colored rubber product relatively insusceptible to coloration at the time of crosslinking reaction and color change after longterm use. Owing to these characteristic features they have been applied to automobile parts, industrial parts, rubber materials for construction, electrical insulating materials, etc. However, these peroxide-crosslinked rubber products are manufactured by performing the crosslinking reaction in an air-free atmosphere such as the space in the die of a hot press or an injection molding machine or in a fused metallic salt. Heating apparatuses working in the presence of air such as a hot air heating apparatus, high frequency heating apparatus, fluidized bed heating apparatus and the like are not useful for preparing crosslinked products. The reason is that, if a peroxide-crosslinking reaction is carried out in the presence of air or in a heating apparatus working in the presence of air, the surface of the crosslinked rubber product thus obtained exhibits a remarkable stickiness (tackiness) and hence the product has no commercial value. When the crosslinking reaction is carried out by means of a steam still type heating apparatus, the air in the vulcanizer must be replaced and expelled with steam used as heat source so that this method is limited in practicability.

According to the prior art, the low ozone resistance, low weather resistance and low heat resistance of conjugated diene polymer rubbers and conjugated diene copolymer rubbers such as butadiene rubber, isoprene rubber, styrene-butadiene rubber and the like have been compensated by blending and vulcanizing them together with EPDM having outstanding performances in these properties.

Inversely, the above-mentioned conjugated diene polymer rubbers or conjugated diene copolymer rubbers are sometimes blended into EPDM in order to compensate the defects of EPDM such as the low adhesive property.

Practical examples of blended products of EPDM and a conjugated diene polymer rubber or a conjugated diene copolymer rubber having improved ozone resistance, weather resistance, heat resistance and adhesive property include window frames, heat resistant hoses, etc. However, according to this technique, mechanical strength of the rubber blend is lower than the mean arithmetic value of the mechanical strength of the two component rubbers, and this is an important disadvantage from a practical point of view.

The above-mentioned disadvantage is attributable to that both rubbers used therein are poor in mutual solubility and hence lack in mutual interaction.

The blended product of the two components cannot be co-vulcanized evenly because the solubilities of the vulcanizing agent and the vulcanization accelerator in one component are different from those in the other component.

In order to solve the above-mentioned problems, many studies have been conducted so far. For example, the use of a long chain alkyl type accelerator was proposed in Japanese Patent Application Kokai (Laid-Open) No. 50-44245. However, such a method could not give any satisfactory result. Thus, there has been known no means for solving the above-mentioned problems in the prior art.

Accordingly, it is one object of the present invention to provide a vulcanizable rubber composition comprising an ethylene/propylene/nonconjugated polyene copolymer satisfying the following requirements simultaneously:

(1) The rubber composition and its vulcanized rubber are excellent in properties such as elasticity, tensile strength, heat resistance, oil resistance, and the like.

(2) The rubber composition can be vulcanized even in the presence of steam or air.

(3) When crosslinking reaction is carried out using a peroxide as crosslinking agent and in a heating apparatus working in the presence of air, the surface of crosslinked rubber exhibits no stickiness.

(4) The rubber composition can be blended and co-vulcanized with conjugated diene polymers and/or copolymers of a conjugated diene and, an $\alpha$-olefin or an aromatic vinyl compound.

With the aim of achieving the above-mentioned object, the present inventors conducted many studies to develop an ethylene/propylene/nonconjugated polyene copolymer rubber satisfying the above-mentioned requirements.

Thus, according to the present invention, there is provided a rubbery copolymer of ethylene, propylene and a nonconjugated polyene, wherein the molar ratio of ethylene/propylene is 86/14 to 97/3, the total content of propylene and nonconjugated polyene is 6 to 30 mole %, the A value as defined by the following equation:

$$ A = \frac{42P + 120D}{42P + 120D + 28E} $$

[Each of P, D and E represents the content (mole %) of propylene, nonconjugated polyene and ethylene, respectively, in the copolymer] satisfies A $\geq$ 0.1 and the copolymer has an intrinsic viscosity of 0.8 to 4.0 dl/g as measured at 70°C in xylene, a melting peak temperature of 70°C or below and a heat of fusion (melting) of 41.8 joule/g (10 cal/g) or below as measured with a differential scanning calorimeter (DSC).

Also, according to the present invention, there is provided a vulcanizable rubber composition comprising the above defined rubbery copolymer.

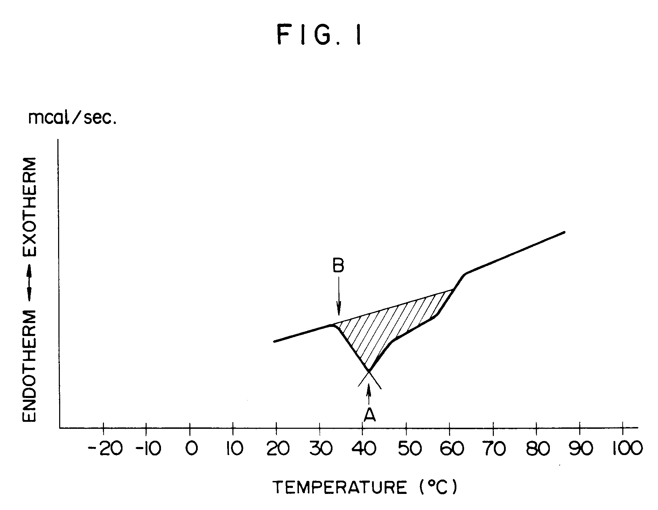

Figure 1 is the melting curve of the rubbery copolymer obtained in Example 1 measured with a DSC, wherein A is the peak temperature of melting, B is the starting temperature of melting, and the area of the shaded part corresponds to the heat of melting.

Specific examples of suitable nonconjugated polyenes are 1,4-hexadiene, dicyclopentadiene, methyldicyclopentadiene, vinyl-norbornene, 5-ethylidene-2-norbornene, and isopropenyl-norbornene. Dicyclopentadiene and 5-ethylidene-2-norbornene are preferred. The content of the polyene compound is preferably in the range of 0.3 to 8% by mole and more preferably 3 to 6% by mole. If the content of polyene compound is higher than 8% by mole, there is little improvement in effect.

In the invention, the ethylene/propylene molar ratio is in the range of 86/14 to 97/3. If the ethylene/propylene molar ratio is smaller than the above-mentioned range, strength of the copolymer tends to be low. If the ethylene/propylene molar ratio is greater than the above-mentioned range, the copolymer tends to be rigid and poor in elastic nature. Thus, the ethylene/propylene molar ratio is preferably in the range of 90/10 to 97/3.

According to the present invention, the total content of propylene and nonconjugated polyene in the rubbery copolymer is in the range of 6 to 30 mole % preferably 6 to 20 mole %, and more preferably 6 to 17 mole % .

In the present invention, value A defined by the following equation satisfies $A \geq 0.1$ and preferably $A \geq 0.12$:

$$A = \frac{42P + 120D}{42P + 120D + 28E}$$

wherein each of P, D and E represents the propylene content, the nonconjugated polyene content and the ethylene content, respectively, all in terms of mole %, in the ethylene/propylene/nonconjugated polyene copolymer.

If A is smaller than 0.1, it is difficult to obtain a rubbery copolymer having such a high ethylene content as claimed in the present invention, and the formed copolymer tends to be rigid, poor in elastic property and low in processability. When $A \geq 0.1$ is satisfied, the vulcanization rate becomes relatively high and the properties of the vulcanized product are good.

The process oil which may be used in the invention is selected from paraffinic, naphthenic and aromatic process oils conventionally used in the rubber industry. It may be selected arbitrarily with consideration of cost.

The process oil may be incorporated into the composition in any amount, in accordance with the intended properties of composition. The process oil is used preferably in an amount of 10 to 150 parts by weight and more preferably 10 to 80 parts by weight per 100 parts by weight of the rubbery copolymer.

Preferably, the aromatic process oil contains aromatic components in an amount of 35% or more and has a viscosity-specific gravity constant (V.G.C.) of 0.95 or above as calculated according to the following equation:

$$\text{V.G.C. (viscosity-specific gravity constant)} = \frac{G - 0.24 - 0.022 \log(V_1 - 35.5)}{0.755}$$

wherein G is the specific gravity of oil at 60°F and $V_1$ is viscosity (SUS) of oil at 210°F.

The inorganic filler which may be used in the invention is not critical. Specific examples of inorganic fillers include white colored fillers such as silica, talc and clay.

The inorganic filler may be used either alone or in the form of a mixture of two or more members.

In the invention, carbon black may be used either alone or in combination with one or more inorganic fillers.

The compounding ratio of inorganic filler and/or carbon black to copolymer may be arbitrarily selected in accordance with the intended properties of the vulcanized product. The inorganic filler and/or carbon black is used usually in an amount of 20 to 400 parts by weight, preferably 40 to 400 parts by weight, more preferably 40 to 150 parts by weight and most preferably 50 to 100 parts by weight per 100 parts by weight of the copolymer.

The copolymer of the present invention has an intrinsic viscosity of 0.8 to 4.0 dl/g and more preferably 1.0 to 3.0 dl/g as measured at 70°C in xylene. When the intrinsic viscosity is in this range, the composition tends to exhibit excellent properties and its processing is relatively easy to carry out. If the intrinsic viscosity is lower than 0.8 dl/g, the properties of the composition tend to be inferior. If the intrinsic viscosity is higher than 4.0 dl/g, the processability of composition tends to be deteriorated.

The copolymers of the present invention have excellent mechanical properties. Their tensile strength at break is 40 kg/cm$^2$ or above and elongation at break is 200 to 1,500% as measured according to JIS K 6301.

Such copolymers could not be produced according to the conventional polymerization processes. This is for the following reason. A copolymer having a high ethylene content is usually produced by increasing the ethylene concentration in the reaction medium, and under such a condition a polymer insoluble or only poorly soluble in a solvent, i.e. a gel, is largely formed which clogs the inner space of the reactor and often inhibits a stable operation.

The present inventors studied processes for obtaining copolymers having a high ethylene content, exhibiting rubbery elasticity and having high strength without gel formation. As the result, it was found that the above-mentioned object can be achieved by combining a specified catalyst system with specified polymerization conditions. Based on this finding, the rubbery copolymers of the present invention can be obtained.

The rubbery ethylene/propylene/nonconjugated polyene copolymers of the present invention can be obtained by using a catalyst system that is soluble in hydrocarbon solvents and comprising a tri-, tetra- or pentavalent vanadium compound, an organoaluminum compound and an ester of a halogenated carboxylic acid.

Specific examples of the vanadium compounds used in the process of the invention include vanadium oxytrichloride; vanadium tetrachloride; vanadate compounds of the general formula $VO(OR)_nX_{3-n}$ ($0 < n \leq 3$; R represents a straight, branched or cyclic hydrocarbon residue having up to 10 carbon atoms; and X represents halogen) such as $VO(OCH_3)_3$, $VO(OCH_3)_2Cl$, $VO(OCH_3)Cl_2$, $VO(OC_2H_5)_3$, $VO(OC_2H_5)_2Cl$, VO-$(OC_2H_5)Cl_2$, $VO(OC_3H_7)_3$, $VO(OC_3H_7)_2Cl$, $VO(OC_3H_7)Cl_2$, $VO(OC_4H_9)_3$, $VO(OC_4H_9)_2Cl$, $VO(OC_4H_9)Cl_2$, V-$(acac)_3$ (acac represents acetylacetone); $VCl_3.nROH$ ($1 < n \leq 3$; $R_1$ represents an alkyl group having 1 to 10 carbon atoms). They are used either alone or in the form of a mixture.

The organoaluminum compound is usually a compound represented by the following general formula:

$$R_mAlX_{3-m}$$

wherein $0 < m \leq 3$; R represents an alkyl group having 1 to 10 carbon atoms; and X represents halogen. Specific examples of organoaluminum compounds include $(C_2H_5)_{1.5}AlCl_{1.5}$, $(C_2H_5)_2AlCl$, $(C_4H_9)_3Al$, $(C_4H_9)_2AlCl$, $(C_4H_9)_{1.5}AlCl_{1.5}$, $(C_6H_{13})_3Al$, $(C_6H_{13})_2AlCl$. They may be used either alone or in the form of a mixture.

Specific examples of esters of halogenated carboxylic acids include methyl trichloracetate, ethyl trichloracetate, propyl trichloracetate, methyl perchlorocrotonate, ethyl perchlorocrotonate and butyl perchlorocrotonate. They may be used either alone or in the form of a mixture.

The quantitative ratios between the organoaluminum compound, the vanadium compound and the ester of a halogenated carboxylic acid can be varied in a wide range. The ratio of organoaluminum compound to ester is preferably 100:1 to 2:1 and more preferably 100:1 to 3:1, both by mole. The ratio of ester to vanadium compound is preferably in the range of 0.1:1 to 100:1. The ratio of organoaluminum compound to vanadium compound is preferably in the range of 1,000:1 to 3:1. The ratio of organoaluminum compound to the sum of ester and vanadium compound is preferably in the range of 100:1 to 2.1:1 by mole.

The polymerization reaction for obtaining the rubbery copolymer of the present invention is carried out as polymerization in solution using a conventional solvent. The solvents usable in this polymerization reaction include aliphatic hydrocarbons such as pentane, hexane, heptane, octane, kerosene and the like; alicyclic hydrocarbons such as cyclohexane and the like; aromatic hydrocarbons such as benzene, toluene, xylene and the like; and halogenated hydrocarbons such as chloroform, trichlorethylene, tetrachlorethane and the like. These solvents may be used either alone or in the form of a mixture.

Although the temperature of the polymerization can be varied in a wide range, it is usually in the range of -50°C to +100°C, preferably in the range of -30°C to +80°C, and more preferably in the range of +30°C to +80°C. The polymerization is carried out at atmospheric pressure or at elevated pressure, and preferably at a pressure of 1 to 50 kg/cm$^2$.

In the above-mentioned production processes, a conventional molecular weight regulator may be used for the purpose of controlling the molecular weight of the resulting copolymer. Particular examples of molecular weight regulators, are diethylzinc, allyl chloride, pyridine-N-oxide and hydrogen. Hydrogen is preferred.

Generally, ethylene/propylene/nonconjugated polyene copolymers contain so-called microcrystals. The copolymers of the present invention also contain such microcrystals. The existence of microcrystals can be detected by means of a differential scanning calorimeter (DSC). The microcrystal state in the copolymers of the present invention is defined as follows by DSC measurement.

That is, the microcrystals of the copolymers of the present invention have a melting peak temperature of 70°C or below, preferably 65°C or below and more preferably 60°C or below and a heat of melting of 41.8 joule/g (10 cal/g) or below, preferably 6.3 to 41.8 joule/g (1.5 to 10 cal/g) and more preferably 6.3 to 25 joule/g (1.5 to 6 cal/g), as measured by DSC.

If the melting peak temperature is higher than 70°C, the copolymer tends to become resinous. If the heat of melting is higher than 41.8 joule/g (10 cal/g), the copolymer tends to be rigid and resinous. If the heat of melting is lower than 6.3 joule/g (1.5 cal/g), the strength of the raw rubber tends to be low.

The DSC measurement is carried out under the following conditions:

DSC:                              DSC-Model 2 (manufactured by Perkin Elmer Co.)
Temperature elevation speed:      20°C/min.
Sensitivity:                      2.1 mJ/sec (0.5 mcal/sec.)
Atmosphere:                       He

In the present invention, the melting peak temperature and the heat of melting were determined from the endotherm peak in the DSC melting curve. A typical example of the curve is shown in Figure 1.

Figure 1 is an example of the DSC melting curve of the copolymer obtained in Example 1 mentioned later, from which the melting peak temperature and the heat of melting were determined in the following manner:

(1) The intersecting point (A) between the two tangent lines of the endotherm (melting) peak was taken as the melting peak temperature.

(2) Over a base line passing the starting point (B) of endotherm (melting) peak, the area of shaded part was evaluated by integration and taken as the heat of melting.

Although the copolymer of the present invention may be used in the form of a single substance, it may also be used in the form of a blend with other rubbers. Although the rubber to be blended therewith is not critical, conjugated diene copolymers and/or copolymers of a conjugated diene and an α-olefin or an aromatic vinyl compound are preferable. More preferable rubbers are butadiene rubber, isoprene rubber, natural rubber, styrene-butadiene rubber and nitrile-butadiene rubber, among which natural rubber and butadiene rubber are most preferred. Of these rubbers, one or more members may be used for blending.

The amount of said rubber used for blending is not critical. Preferably, 1 to 10,000 parts by weight thereof is blended and more preferably 1 to 250 parts by weight thereof is blended into 100 parts by weight of the copolymer of the present invention.

The copolymer of the present invention can be vulcanized in the same manner as conventional ethylene/propylene/nonconjugated polyene copolymers.

As vulcanizing agents, e.g. peroxides or sulfur are suitable.

In the case of sulfur vulcanization, sulfur is used in an amount of 0.1 to 10 parts by weight and preferably 0.5 to 5 parts by weight per 100 parts by weight of the copolymer. If desired, one or more vulcanization accelerators may be used.

The organic peroxides which can be used include peroxy ketal type, hydroperoxide type, dialkyl peroxide type, diacyl peroxide type and peroxy ester type compounds. Specific examples of organic peroxides are 1,1-bis(t-butylperoxy)-3,3,5-trimethylcyclohexane, dicumyl peroxide, di-t-butylperoxide, t-butylperoxy cumene, benzoyl peroxide and 2,5-dimethyl-2,5-di(t-butylperoxy)hexane. The organic peroxide is selected with consideration of the type of rubber used, the safety in handling, the odor, etc. The organic peroxide is used in an amount of 0.5 to 20 parts by weight and preferably 1 to 10 parts by weight per 100 parts by weight of the base rubber, and its amount is increased or decreased in accordance with the intended properties of the crosslinked rubber product to be produced.

Specific examples of suitable vulcanization accelerators assistants are diphenylguanidine, mercaptobenzothiazole, N-cyclohexylbenzothiazyl sulfenamide, zinc salt of mercantobenzothiazole and sodium dimethyldithiocarbamate.

In the case of peroxide vulcanization, p,p'-dibenzoyl quinone dioxime, quinone dioxime, triallyl cyanurate, sulfur, ethylene dimethacrylate, N,N'-m-phenylene bismaleimide, triallyl isocyanurate, trimethylolpropane trimethacrylate and the like may be added as a vulcanization assistant in addition to the above-mentioned ones.

In carrying out the vulcanization, activators, dispersants, plasticizers, tackiness improvers, colorants, foaming agents, anti-aging agents, and other additives may be used similarly to the case of usual EPDM.

The anti-aging agents used in the present invention include 2-mercaptobenzimidazole, trinonylphenyl phosphite, 2,6-di-t-butyl-4-methylphenol, 1,1-bis(4-hydroxyphenyl)cyclohexane, N-phenyl-N'-isopropyl-p-phenylenediamine and the like which are all well known as conventional anti-aging agents or antioxidants in the rubber industry.

6

If desired, the copolymer is compounded with other additives such as a process oil, an inorganic filler, carbon black, a conjugated diene polymer, a copolymer of a conjugated diene and an α-olefin or an aromatic vinyl compound, a crosslinking agent, and the like.

Compounding can be carried out by the usual kneading process using e.g. a Banbury mixer, or roll mill.

The uncrosslinked rubber composition obtained by the above-mentioned compounding process is then formed into the desired molded product by a preliminary molding. This molding is carried out in a conventional apparatus such as an extruder, a press, or roll.

As the method of vulcanization, sulfur vulcanization and peroxide vulcanization are both adoptable. By the process of usual press vulcanization or continuous vulcanization, a vulcanized product can be obtained.

Further, unlike the prior techniques where only heating apparatuses working in the absence of air such as hot press, fused metallic salt bath and the like are usable as the vulcanizing apparatus, the present invention is free from such a restriction. The crosslinking reaction may be effected by means of various heating apparatuses working in the presence of air such as a hot air heating apparatus, high frequency heating apparatus and fluidized bed heating apparatus.

Further, in the present invention, vulcanization can be carried out even under an elevated air pressure in order to prevent foaming in the hot air heating apparatus.

Further, even in a steam still type heating apparatus which can be used in the prior techniques only after replacing the air from the inner space with steam used as heat source, according to the present invention the crosslinking reaction may be carried out without such a restriction. Further, if desired, crosslinking can be achieved by the combined use of two or more kinds of heating apparatuses, such as the combination of a hot air heating apparatus and a high frequency heating apparatus, for example.

Further, the rubber composition of the present invention can give crosslinked products by the so-called continuous vulcanization process which is a combination of an extruder or the like and the above-mentioned heating apparatus, unlike the prior techniques where such a combined use has been impossible to be realized.

Temperature and duration of the crosslinking reaction depend on the properties of the rubber composition and the desired properties of the crosslinked product.

By the use of the rubber composition of the present invention, a vulcanized product excellent in tensile strength, heat resistance, oil resistance, compression set resistance and flexing characteristics can be obtained.

This vulcanized product can be used for automobile parts and other articles such as socket covers, heat resistant hoses, electric wires, condense caps, heat resistant belts, oscillation-proof rubbers, packings, hoses, weather strips, seal sponges, black side wall of tires.

Next, the present invention will be illustrated in more detail with reference to the following Examples and Comparative Examples.

Example 1

Into a 10 liter stainless steel autoclave equipped with a stirrer, hexane (10 kg/hour), ethylene (0.45 kg/hour), propylene (0.50 kg/hour) and 5-ethylidene-2-norbornene (hereinafter referred to as ENB) (0.15 kg/hour) were fed at the mentioned rates from the bottom part of the autoclave and hydrogen was fed at a rate of 0.162% by mole. Further, as catalyst, ethylaluminum sesquichloride, vanadyl trichloride and n-butyl perchlorocrotonate were continuously fed at a rate of 0.5 g/hour, 0.032 g/hour and 0.15 g/hour, respectively.

The polymerization reaction was carried out in the state of a homogeneous solution at a temperature of 50°C. The reacted liquid mixture was continuously withdrawn. After adding a polymerization stopper thereto, the resulting copolymer was precipitated by steam stripping and then dried.

Thus, a copolymer was obtained in a yield of 320 g/hour.

The copolymer thus obtained had a molar ratio of ethylene/propylene of 93/7. Its ENB content was 4.5% by mole, its A value was 0.248, and its intrinsic viscosity was 1.63 dl/g. The ethylene content and ENB content were measured by infrared spectroscopy.

As measured by DSC, its melting peak temperature was 42°C and its heat of melting was 23 joules/g (5.6 cal/g).

As measured according to JIS K 6301, this copolymer had a tensile strength at break of 150 kg/cm$^2$ and an elongation at break of 630%. Its JIS A hardness was 64.

A rubber composition having the formulation of Table 1 was press-vulcanised at 160°C for 15 minutes, and the properties of the vulcanizate obtained were measured according to JIS K 6301.

Results of the measurements of properties are summarized in Table 2.

Example 2

The polymerization reaction was carried out in the same manner as in Example 1, except that hexane, ethylene, propylene and ENB were fed at a rate of 7 kg/hour, 0.51 kg/hour, 0.41 kg/hour and 0.15 kg/hour, respectively. Hydrogen was fed at a rate of 0.162% by mole.

As catalyst components, ethylaluminum sesquichloride, vanadium oxytrichloride and n-butyl perchlorocrotonate were fed at a rate of 0.4 g/hour, 0.023 g/hour and 0.11 g/hour, respectively. The polymerization temperature was 50°C.

Thus, a copolymer was obtained in a yield of 350 g/hour.

The copolymer thus obtained had a molar ratio of ethylene/propylene of 97/3, an ENB content of 4.5% by mole, an A value of 0.203 and an intrinsic viscosity of 1.64 dl/g.

As measured by DSC, its melting peak temperature was 41°C and its heat of melting was 22 joules/g (5.3 cal/g).

Comparative Example 1

The polymerization was carried out in the same manner as in Example 1, except that hexane, ethylene and ENB were fed at a rate of 10 kg/hour, 0.6 kg/hour and 0.11 kg/hour, respectively, and hydrogen was fed at a rate of 0.09% by mole.

As catalyst components, ethylaluminum sesquichloride, vanadium oxytrichloride and n-butyl perchlorocrotonate were fed at a rate of 0.30 g/hour, 0.015 g/hour and 0.05 g/hour, respectively. The polymerization temperature was 50°C. In this experiment, a large amount of insoluble substances was formed in the polymerization reactor, so that no stable polymerization could be carried out.

The ethylene/nonconjugated polyene copolymer thus obtained was a resinous substance. The copolymer had an ENB content of 4% by mole and an A value of 0.14. Its melting peak temperature was 88°C as measured by DSC.

Comparative Example 2

The procedure of Example 1 was repeated, except that hexane, ethylene, propylene and ENB were fed at a rate of 10 kg/hour, 4.7 kg/hour, 8.9 kg/hour and 0.18 kg/hour, respectively, and hydrogen was fed at a rate of 0.102% by mole.

As catalyst components, ethylaluminum sesquichloride, vanadium oxytrichloride and n-butyl perchlorocrotonate were fed at a rate of 1.1 g/hour, 0.05 g/hour and 0.27 g/hour, respectively. The polymerization temperature was 50°C.

Thus, a copolymer was obtained in a yield of 390 g/hour.

Comparative Example 3

The procedure of Example 1 was repeated, except that hexane, ethylene, propylene and ENB were fed at a rate of 7 kg/hour, 0.39 kg/hour, 0.98 kg/hour and 0.03 kg/hour, respectively, and hydrogen was fed at a rate of 0.05% by mole.

As catalyst components, ethylaluminum sesquichloride, vanadium oxytrichloride and n-butyl perchlorocrotonate were fed at a rate of 1.2 g/hour, 0.06 g/hour and 0.3 g/hour, respectively. The polymerization temperature was 50°C.

Thus, a copolymer was obtained in a yield of 490 g/hour.

The copolymers obtained in Example 2 and Comparative Examples 2 and 3 were formulated and vulcanized in the same manner as in Example 1, and the properties of the vulcanized products were measured.

The results of the measurements are summarized in Table 2.

## Table 1

|     |                | |
| --- | -------------- | --------------------- |
| (I) | Polymer        | 100 parts by weight   |
|     | Carbon black   | 60                    |
|     | Paraffin oil   | 20                    |
|     | ZnO            | 5                     |
|     | Stearic acid   | 1                     |
| (II)| Soxinol ® TS *1 | 1                   |
|     | Soxinol ® M *2 | 0.25                  |
|     | Sulfur         | 1                     |

(I) was kneaded in a Banbury mixer (Model BR) (starting at a temperature of 70°C, for 5 minutes), and then (II) was added thereto and kneaded with a 5-inch roll mill. The vulcanization was carried out by pressing at 160°C for 15 minutes.

*1      Vulcanization accelerator (tetramethyl-thiuram monosulfide) manufactured by Sumitomo Chemical Co., Ltd.

*2      Vulcanization accelerator (2-mercapto-benzothiazole) manufactured by Sumitomo Chemical Co., Ltd.

It is apparent from the results that, according to the present invention, there can be provided an ethylene/propylene/nonconjugated polyene copolymer rich in elastic character, sufficiently high in strength of copolymer and strength of the vulcanizate and capable of satisfying the requirements concerning high performance .

Table 2

| | | Example 1 | Example 2 | Comparative Example 2 | Comparative Example 3 |
|---|---|---|---|---|---|
| Rubbery copolymer | Ethylene/Propylene (molar ratio) | 93/7 | 97/3 | 84/16 | 77/23 |
| | Content of (propylene + nonconjugated polyene) (% by mole) | 11.2 | 7.4 | 19.1 | 24 |
| | A value | 0.25 | 0.20 | 0.33 | 0.34 |
| | Intrinsic viscosity (dl/g) | 1.63 | 1.64 | 1.65 | 1.88 |
| | Melting peak temp. (°C) | 42 | 41 | 40 | - |
| | Heat of melting in joule/g and parenthetically (cal/g) | 23 (5.6) | 22 (5.3) | 5.9 (1.4) | - |
| Properties of raw rubber | tensile strength at break (kg/cm²) | 150 | 390 | 50 | 50 |
| | Elongation at break (%) | 630 | 480 | 920 | >1,200 |
| | $ML_{1+4}$ 100°C of Raw rubber | 84 | 85 | 81 | 90 |
| | $ML_{1+4}$ 100°C of Compound | 81 | 83 | 79 | 95 |

- continued -

EP 0 275 925 B1

- Continued -

| Properties of vulcanized product | 200% modulus (kg/cm$^2$) | 115 | 134 | 97 | 78 |
|---|---|---|---|---|---|
| | 300% modulus (kg/cm$^2$) | 186 | 201 | 167 | 132 |
| | tensile strength at break(kg/cm$^2$) | 261 | 272 | 239 | 227 |
| | Elongation at break (%) | 410 | 420 | 400 | 440 |
| | Hardness (JIS-A) | 85 | 88 | 74 | 70 |
| | tear strength (kg/cm$^2$) | 64.6 | 67.5 | 53.9 | 53.0 |
| | Compression set (%) 125°C x 22 hrs. | 50.7 | 51.2 | 48.9 | 54.5 |
| | -20°C x 22 hrs. | 58.5 | 56.9 | 74.3 | 71.7 |
| | Embrittle temp. | -66°C | -66°C | -66°C | <-70°C |

Examples 3 to 6 and Comparative Examples 4 to 7

Table 3 illustrates the characteristic properties of the rubbery copolymers used in these examples. Tables 4 and 5 illustrate formulations of compositions and properties of vulcanized products.

In these examples, kneading was carried out in the following manner.

Thus, filler, process oil and polymer were simultaneously charged into a Banbury mixer having an inner volume of 1.5 liters (Model BR, manufactured by Kobe Steel, Ltd.) and kneaded at 12p for 5 minutes. The temperature at the start of kneading was 70°C, which ascended to 150°C when kneading was completed. The vulcanizing agent and the vulcanization assistants were added by means of 10 inch open roll kept at 50°C. The vulcanization was carried out with a steam press at 160°C for 15 minutes with the formulation of Table 4 and at 160°C for 20 minutes with the formulation of Table 5.

Properties of the vulcanized products were measured according to JIS K 6301. Compression set was measured at 125°C for 22 hours. Oil resistance was evaluated by measuring volume swell percentage after immersion in JIS No. 3 oil at 150°C for 70 hours. Heat resistance was evaluated by measuring the tensile properties after aging at 120°C for 5 days.

It is apparent from the results that, according to the present invention, there can be provided a rubbery copolymer composition superior in physical properties, oil resistance and heat resistance of vulcanized product compared with the conventional ones.

Table 3

| | Ethylene copolymer rubber | | | |
| --- | --- | --- | --- | --- |
| | A | B | C | D |
| Ethylene/Propylene (molar ratio) | 90/10 | 96/4 | 78/22 | 70/30 |
| Propylene + Polyene (% by mole) | 14.0 | 8.5 | 23.5 | 34.0 |
| Polyene used | 5-Ethylidene-2-norbornene | ditto | ditto | ditto |
| Tg (°C) | -35.0 | -31.3 | -54.0 | -54.5 |

EP 0 275 925 B1

Table 4

| | | Example | | Comparative Example | |
|---|---|---|---|---|---|
| | | 3 | 4 | 4 | 5 |
| Formulation of compositions (part by weight) | $ML_{1+4}$ 100°C of Raw rubber | 80 | 82 | 77 | 75 |
| | $ML_{1+4}$ 100°C of Compound | 79 | 81 | 79 | 79 |
| | Ethylene/Propylene/Polyene copolymer | A 100 | B 100 | C 100 | D 100 |
| | HAF carbon | 60 | 60 | 60 | 60 |
| | Paraffin oil | 20 | 20 | 20 | 20 |
| | Stearic acid | 1 | 1 | 1 | 1 |
| | Zinc oxide | 5 | 5 | 5 | 5 |
| | Soxinol® TS *1 | 1 | 1 | 1 | 1 |
| | Soxinol® M *2 | 0.25 | 0.25 | 0.25 | 0.25 |
| | Sulfur | 1 | 1 | 1 | 1 |

- To be continued -

EP 0 275 925 B1

- Continued -

| | | | | | |
|---|---|---|---|---|---|
| Properties of vulcanized product | Tensile strength (kgf/cm$^2$) | 252 | 272 | 227 | 183 |
| | Elongation (%) | 410 | 420 | 440 | 380 |
| | Hardness (Hardness tester type A) | 80 | 88 | 70 | 70 |
| | Tear strength (kg-cm) | 60 | 68 | 53 | 49 |
| | Compression set, (Deformation (%) after 25% compression at 125°C for 22 hrs.) | 50 | 51 | 55 | 49 |
| Oil resistance | Volume swell (%) after immersion in JIS No. 3 oil at 150°C for 70 hrs. | 210 | 199 | 270 | 230 |
| Heat resistance after 120°C x 5 days | Tensile strength (kgf/cm$^2$) | 253(100) | 273(100) | 206(91) | 174(95) |
| | Elongation (%) | 270(66) | 280(67) | 270(61) | 240(62) |
| | Hardness (A type tester) | 84(+4) | 90(+2) | 75(+5) | 77(+7) |

(   ):   Percent maintenance or change

*1:   Vulcanization accelerator (tetramethyl-thiuram monosulfide) manufactured by Sumitomo Chemical Co., Ltd.

*2:   Vulcanization accelerator (2-mercaptobenzothiazole) manufactured by Sumitomo Chemical Co., Ltd.

Table 5

| | | Example | | Comparative Example | |
|---|---|---|---|---|---|
| | | 5 | 6 | 6 | 7 |
| Formulation of compositions (part by weight) | Ethylene/Propylene/Polyene copolymer | A 100 | B 100 | C 100 | D 100 |
| | FEF black | 100 | 100 | 100 | 100 |
| | Paraffin oil | 80 | 80 | 80 | 80 |
| | Stearic acid | 1 | 1 | 1 | 1 |
| | Zinc oxide | 5 | 5 | 5 | 5 |
| | Soxinol Ⓡ BZ *1 | 1.0 | 1.0 | 1.0 | 1.0 |
| | Soxinol Ⓡ TRA *2 | 1.5 | 1.5 | 1.5 | 1.5 |
| | Soxinol Ⓡ TT *3 | 0.5 | 0.5 | 0.5 | 0.5 |
| | Soxinol Ⓡ M *4 | 3.0 | 3.0 | 3.0 | 3.0 |
| | Sulfur | 0.8 | 0.8 | 0.8 | 0.8 |

- To be continued -

EP 0 275 925 B1

- Continued -

| | | | | | |
|---|---|---|---|---|---|
| Properties of vulcanized product | Tensile strength (kgf/cm$^2$) | 165 | 190 | 146 | 117 |
| | Elongation (%) | 340 | 370 | 450 | 250 |
| | Hardness (A type tester) | 72 | 82 | 67 | 67 |
| | Tear strength (kg-cm) | - | - | - | - |
| | Compression set (Deformation % after 25% compression at 120°C for 22 hrs.) | 55 | 55 | 65 | 61 |
| Oil resistance | Volume swell (%) after immersion in JIS No. 3 oil at 100°C for 70 hrs. | 82 | 86 | 120 | 90 |
| Heat resistance | Tensile strength (kgf/cm$^2$) | 155(94) | 191(101) | 136(93) | 98(84) |
| | Elongation (%) | 140(40) | 200(54) | 100(22) | 70(28) |
| | Hardness (A type tester) | 80(+8) | 85(+3) | 90(+29) | 78(+9) |

( ): Percent maintenance or change

*1: Vulcanization accelerator manufactured by Sumitomo Chemical Co., Ltd. (zinc di-n-butyl dithiocarbamate)

*2: ditto (dipentamethylenethiuram tetrasulfide)

*3: ditto (tetramethylthiuram disulfide)

*4: ditto (2-mercaptobenzothiazole)

Examples 7 and 8 and Comparative Examples 8 and 9

Table 6 illustrates the characteristic properties of the rubbery copolymers used in these examples, and Table 7 illustrates the formulations of compositions and properties of vulcanized products.

17

The kneading was carried out in the following manner.

Thus, filler, process oil and polymer were simultaneously charged into a Banbury mixer having an inner volume of 1.5 liter (Model BR, manufactured by Kobe Steel, Ltd.) and kneaded at 12p for 5 minutes. The temperature at the start of kneading was 70°C, which ascended to 150°C when the kneading was completed. The vulcanizing agent and the vulcanization assistants were added by the use of a 10 inch open roll kept at 50°C. The vulcanization was carried out with a steam press at 160°C for 20 minutes.

Properties of the vulcanized products were measured according to JIS K 6301. Compression set was measured at 120°C for 22 hours. Oil resistance was evaluated by measuring volume swell percentage after immersion in JIS No. 3 oil at 100°C for 7 hours. Heat resistance was evaluated by measuring tensile properties after aging at 150°C for 7 days.

It is apparent from the results that, according to the present invention, there can be provided a rubbery copolymer superior to those of prior art in physical properties, oil resistance and heat resistance of vulcanized product.

Table 6

| | Ethylene copolymer rubber | | | |
|---|---|---|---|---|
| | A | B | C | D |
| Ethylene/Propylene (molar ratio) | 90/10 | 96/4 | 78/22 | 70/30 |
| Propylene + Polyene (% by mole) | 14.0 | 8.5 | 23.5 | 34.0 |
| Polyene used | 5-Ethylidene-2-norbornene | ditto | ditto | ditto |
| Tg (°C) | -35.0 | -31.3 | -54.0 | -54.5 |

EP 0 275 925 B1

Table 7

| Formulations of compositions (part by weight) | | Example | | Comparative Example | |
|---|---|---|---|---|---|
| | | 7 | 8 | 8 | 9 |
| | Ethylene copolymer rubber | A 100 | B 100 | C 100 | D 100 |
| | FEF black | 100 | 100 | 100 | 100 |
| | Aroma oil *1 | 80 | 80 | 80 | 80 |
| | Stearic acid | 1 | 1 | 1 | 1 |
| | Zinc oxide | 5 | 5 | 5 | 5 |
| | Soxinol (R) BZ | 1.0 | 1.0 | 1.0 | 1.0 |
| | Soxinol (R) TRA | 1.5 | 1.5 | 1.5 | 1.5 |
| | Soxinol (R) TT | 0.5 | 0.5 | 0.5 | 0.5 |
| | Soxinol (R) M | 3.0 | 3.0 | 3.0 | 3.0 |
| | Sulfur | 0.8 | 0.8 | 0.8 | 0.8 |

- To be continued -

EP 0 275 925 B1

– Continued –

| Properties of vulcanized product | | | | | |
|---|---|---|---|---|---|
| Tensile strength (kgf/cm$^2$) | 163 | 180 | 140 | 110 |
| Elongation (%) | 530 | 520 | 420 | 210 |
| Hardness (type A tester) | 69 | 77 | 65 | 65 |
| Compression set (Deformation (%) after 25% compression at 120°C for 22 hrs.) | 57 | 55 | 69 | 63 |
| Oil resistance — Volume swell (%) after immersion in JIS No. 3 oil at 100°C for 7 hrs. | 80 | 83 | 132 | 95 |
| Heat resistance after 150°C x 7 days — Tensile strength (kgf/cm$^2$) | 156(96) | 178(99) | 129(92) | 88(80) |
| Elongation (%) | 240(45) | 280(53) | 80(20) | 50(25) |
| Hardness (type A tester) | 77(+8) | 80(+3) | 92(+27) | 75(+10) |

( ) : Percent maintenance or change

*1: Kyoseki process X-100, manufactured by Kyodo Sekiyu K.K. for an aroma type process oil

Examples 9 and 10 and Comparative Examples 10 to 12

Table 8 illustrates the characteristic properties of the ethylene/propylene/nonconjugated polyene copolymers used in these examples, and Table 9 illustrates the formulations of compositions and the

21

properties of vulcanized products.

Kneading was carried out in the following manner.

The polymer was charged into a Banbury mixer having an inner volume of 1.5 liter (Model ER, manufactured by Kobe Steel, Ltd.) and kneaded for 30 seconds, after which filler and process oil were added and the mixture was kneaded at 12p for 4.5 minutes. The temperature at the start of kneading was 70°C, which ascended to 170°C when the kneading was completed. The vulcanizing agent and the vulcanization assistants were added by the use of a 10 inch open roll kept at 50°C. The vulcanization was carried out with a steam press at 160°C for 10 minutes.

Properties of the vulcanized products were measured according to JIS K 6301.

It is apparent from the results that, according to the invention, there can be provided a vulcanizable rubber composition superior to those of prior art in properties such as tensile strength, flexing resistance, etc.

Table 8

| | Ethylene copolymer rubber | | | |
|---|---|---|---|---|
| | A | B | C | D |
| Ethylene/Propylene (molar ratio) | 86/14 | 93/7 | 69/31 | 65/35 |
| Propylene + Polyene (% by mole) | 18 | 11 | 35 | 37 |
| Polyene used | 5-Ethylidene-2-norbornene | ditto | ditto | ditto |

EP 0 275 925 B1

Table 9

| | | Example | | Comparative Example | | |
|---|---|---|---|---|---|---|
| | | 9 | 10 | 10 | 11 | 12 |
| Formulations of compositions (part by weight) | Natural rubber | 50 | 50 | 50 | 50 | 50 |
| | Butadiene rubber *1 | 20 | 20 | 20 | 20 | 50 |
| | Ethylene/Propylene/Non-conjugated polyene copolymer | A 30 | B 30 | C 30 | D 30 | − |
| | GPF carbon | 50 | 50 | 50 | 50 | 50 |
| | Naphthene oil | 12 | 12 | 12 | 12 | 12 |
| | Stearic acid | 1 | 1 | 1 | 1 | 1 |
| | Zinc oxide | 3 | 3 | 3 | 3 | 3 |
| | Soxinol® NBS *2 | 1.0 | 1.0 | 1.0 | 1.0 | 1.0 |
| | Sulfur | 1.75 | 1.75 | 1.75 | 1.75 | 1.75 |
| Properties of vulcanized product | Tensile strength (kgf/cm$^2$) | 180 | 175 | 161 | 147 | 177 |
| | Elongation (%) | 600 | 520 | 570 | 570 | 600 |
| | Hardness (JIS-A) | 61 | 67 | 57 | 55 | 55 |

- To be continued -

EP 0 275 925 B1

— Continued —

| | | | | | |
|---|---|---|---|---|---|
| Flexing test (de Mattia machine, growth method, room temp.) | Crack length at: | | | | |
| | 100,000 flexes (mm) | 5.7 | 4.2 | 6.0 | 9.3 | 3.9 |
| | 200,000 flexes (mm) | 6.4 | 5.9 | 10.6 | 14< | 5.4 |
| | 300,000 flexes (mm) | 6.7 | 7.4 | 11.8 | 14< | 6.5 |
| Ozone resistance (Static method at 50% elongation, 100 pphm O$_3$) | After 5 hrs. at 45°C | No crack | No crack | No crack | No crack | C-2 *3 |

*1: Butadiene rubber BR-01, manufactured by Japan Synthetic Rubber Co., Ltd.

*2: Vulcanization accelerator (N-oxydiethylene-benzothiazyl sulfenamide) manufactured by Sumitomo Chemical Co., Ltd.

*3: Many cracks detectable by the naked eye

Examples 11 to 14 and Comparative Examples 13 and 14

Table 10 illustrates the characteristic properties of the rubbery copolymers used in these examples, and Table 11 illustrates the formulations of compositions and the properties of vulcanized products wherein formulations are expressed by "parts by weight" per 100 parts by weight of the copolymer. Kneading and vulcanization were carried out in the following manner.

Filler, process oil and polymer were simultaneously charged into a Banbury mixer having an inner volume of 1.5 liter (Model BR, manufactured by Kobe Steel, Ltd.) and kneaded at 12p for 5 minutes. The temperature was 70°C at the start of kneading, which ascended to 150°C when the kneading was completed.

Peroxide and crosslinking assistants were added by the use of 10 inch open roll kept at 50°C.

The vulcanization was carried out in a jacketed vulcanizer. Hot air vulcanization was performed by introducing steam into the jacket. The vulcanization was carried out at 170°C for 20 minutes.

Properties of the vulcanized products were measured according to JIS K 6301. Compression set was measured at 100°C for 22 hours. Heat resistance was evaluated by measuring tensile properties after 3 days at 150°C.

The surface tackiness (stickiness) (state of vulcanization) of vulcanized products was evaluated in the following manner. Thus, a square bleached cotton cloth of about 40 cm square was impregnated with 10 ml of toluene. While applying a load of 75 kg/cm$^2$ onto the cloth, the cloth was shifted on the surface of a rubber sample for a distance of 100 mm at a speed of 25 mm/second, after which the state or surface of the bleached cotton cloth was visually examined. When the surface of the vulcanized product was sticky, copolymer rubber or filler adhered to the cloth by the action of toluene. Surface stickiness of vulcanized product was evaluated on the basis of the state of their adherence.

The results of these examples demonstrate that the vulcanisates of the copolymers of the present invention exhibit excellent heat resistance and particularly show excellent compression set without any surface stickiness even when vulcanized in the presence of air.

Examples 15 to 18 and Comparative Example 15

Table 10 illustrates the characteristic properties of the rubbery copolymers used in these examples, and Table 12 illustrates the formulations of compositions and the properties of vulcanized products wherein formulation is expressed by "parts by weight" per 100 parts by weight of the copolymer.

The kneading was carried out in the same manner as in Examples 11 to 13.

The vulcanization was carried out in a jacketed vulcanizer by hot air vulcanization while introducing steam into the jacket. Further, air was introduced into the inner space of the vulcanizer, and the pressure of the hot air was varied as shown in Table 12 to perform vulcanization. The vulcanization was carried out at 160°C for 15 minutes.

Properties of the vulcanized products were measured according to JIS K 6301. Compression set was measured at 100°C for 22 hours. Heat resistance was evaluated by measuring tensile properties after 7 days at 150°C.

Surface stickiness (state of vulcanization) of vulcanized products was evaluated in the same manner as in Examples 11 to 13.

The results of these examples demonstrate that the rubbery compositions of the present invention exhibit their effect without any restriction by air pressure or the like.

It is apparent from the results that, according to the present invention, there can be provided rubber compositions that are vulcanizable in the presence of oxygen which exhibit no surface stickiness and have excellent tensile strength, heat resistance, compression set, etc. after vulcanization.

Table 10

| | Copolymer A | Copolymer B | Copolymer C | Copolymer D | Copolymer E | Copolymer F |
|---|---|---|---|---|---|---|
| Ethylene/Propylene (molar ratio) | 96.6/3.4 | 93.3/6.7 | 89.5/10.5 | 93.1/6.9 | 57.8/42.2 | 78.6/21.4 |
| Polyene (% by mole) | 3.2 | 3.6 | 3.2 | 4.0 | 4.4 | 1.1 |
| Propylene + Polyene (% by mole) | 6.5 | 10.0 | 13.4 | 10.6 | 44.6 | 22.3 |
| Polyene used | DCPD [1] | DCPD [1] | DCPD [1] | ENB [2] | ENB [2] | ENB [2] |
| A value | 0.166 | 0.217 | 0.251 | 0.232 | 0.588 | 0.320 |

[1] dicyclopentadiene

[2] 5-ethylidene-2-norbornene

EP 0 275 925 B1

Table 11

| | | Example 11 | Example 12 | Example 13 |
|---|---|---|---|---|
| | | Copolymer A | Copolymer B | Copolymer C |
| Formulation of compositions (part by weight) | Seast ® 3  *1 | 60 | 60 | 60 |
| | PW-380  *2 | 20 | 20 | 20 |
| | ZnO | 5 | 5 | 5 |
| | Stearic acid | - | - | - |
| | Dicumyl peroxide | 4 | 4 | 4 |
| | Soxinol ® TS  *3 | - | - | - |
| | Soxinol ® M  *3 | - | - | - |
| | Sulfur | - | - | - |
| Properties of vulcanized product | Tensile strength $(kgf/cm^2)$ | 104 | 94 | 104 |
| | Elongation (%) | 170 | 140 | 190 |
| | Hardness (JIS-A) | 82 | 75 | 68 |
| | Compression set (%) | 1.6 | 1.2 | 1.6 |

- To be continued -

- Continued -

| Heat resistance 150°C x 3 days | Maintenance of strength (%) | 48 | 58 | 60 | |
|---|---|---|---|---|---|
| | Maintenance of elongation (%) | 29 | 28 | 32 | |
| | Change in hardness | +3 | +9 | +9 | |
| | State of surface vulcaniza-tion  *6 | ○ | ○ | ○ | |

EP 0 275 925 B1

| Comparative Example 13 | Comparative Example 14 | Example 14 |
|---|---|---|
| Copolymer F | Copolymer E | Copolymer A |
| 60 | 60 | 60 |
| 20 | 20 | 20 |
| 5 | 5 | 6 |
| - | - | 1 |
| 4 | 4 | - |
| - | - | 1.5 |
| - | - | 0.5 |
| - | - | 1.5 |
| 131 | 20 | 274 |
| 260 | 100 | 310 |
| 59 | 49 | 87 |
| 3.8 | 1.5 | 35.6 |

- Continued -

| | | |
|---|---|---|
| 46 | 140 | 54 |
| 69 | 50 | 19 |
| +3 | +27 | +5 |
| × | × | ○ |

EP 0 275 925 B1

Table 12

| | | Example 15 | Example 16 | Example 17 | Example 18 | Comparative Example 15 |
|---|---|---|---|---|---|---|
| | | Copolymer D | Copolymer D | Copolymer D | Copolymer D | Copolymer E |
| Formulation of composi-tions (part by weight) | Seast ® 3 *1 | 80 | 80 | 80 | 80 | 80 |
| | PW-380 *2 | 40 | 40 | 40 | 40 | 40 |
| | ZnO | 5 | 5 | 5 | 5 | 5 |
| | Stearic acid | 1 | 1 | 1 | 1 | 1 |
| | Perhexa 3M *4 | 4 | 4 | 4 | 4 | 4 |
| | TAIC *5 | 2 | 2 | 2 | 2 | 2 |
| | Hot air pressure $(kg/cm^2-G)$ | 0 | 1 | 4 | 6 | 0 |
| Properties of vulcanized product | Tensile strength $(kgf/cm^2)$ | 143 | 144 | 144 | 148 | 120 |
| | Elongation (%) | 130 | 140 | 140 | 150 | 250 |
| | Hardness (JIS-A) | 80 | 80 | 78 | 79 | 70 |

- To be continued -

- Continued -

| | | | | | | |
|---|---|---|---|---|---|---|
| Heat resistance 150°C x 7 days | Maintenance of strength (%) | 84 | 89 | 61 | 57 | 50 |
| | Maintenance of elongation (%) | 69 | 64 | 53 | 47 | 70 |
| | Change in hardness | +4 | +5 | +7 | +6 | +3 |
| | State of surface vulcanization *6 | ○ | ○ | ○ | ○ | × |

Notes to Table 11 and Table 12

*1  HAF carbon manufactured by Tokai Carbon Co., Ltd.

*2  Paraffin oil manufactured by Idemitsu Sekiyu Kagaku K. K.

*3  Vulcanization accelerators manufactured by Sumitomo Chemical Co., Ltd.

*4  1,1-Bis(t-butylperoxy)-3,3,5-trimethylcyclohexane manufactured by Nippon Oil & Fats Co., Ltd.

*5  Triallyl isocyanurate manufactured by Nippon Kasei Chemical Co., Ltd.

*6  ○ --- Deposition of carbon or polymer is hardly noticeable on the bleached cotton cloth

     × --- Deposition of carbon or polymer is noticed.

## Claims

1. Rubbery copolymer of ethylene, propylene and a nonconjugated polyene, wherein the molar ratio of ethylene/propylene is 86/14 to 97/3, the total content of propylene and nonconjugated polyene is 6 to 30 mole %, and having an A value as defined by the following equation:

$$A = \frac{42P + 120D}{42P + 120D + 28E}$$

[Each of P, D and E represents the content (% by mole) of propylene, nonconjugated polyene and ethylene, respectively, in the copolymer] of A ≥ 0.1 and the copolymer has an intrinsic viscosity of 0.8 to 4.0 dl/g as measured at 70°C in xylene, a melting peak temperature of 70°C or below and a heat of melting of 41.8 joule/g (10 cal/g) or below as measured with a differential scanning calorimeter.

2. Copolymer according to Claim 1, wherein the total content of propylene and nonconjugated polyene is 6 to 17 mole % .

3. Copolymer according to Claim 1 wherein the A value is ≥ 0.12.

4. Copolymer according to Claim 1, wherein said nonconjugated polyene is 5-ethylidene-2-norbornene and/or dicyclopentadiene.

5. Copolymer according to Claim 1, wherein the melting peak temperature is 65°C or below and the heat of melting is 6.3 to 25 joule/g (1.5 to 6 cal/g) as measured with a differential scanning calorimeter.

6. A vulcanizable rubber composition comprising the rubbery copolymer of any one of claims 1 to 5.

7. A vulcanizable rubber composition according to Claim 6, wherein the content of said nonconjugated polyene is 0.3 to 8 mole % .

8. A vulcanizable rubber composition according to Claim 6, wherein the content of said nonconjugated polyene is 3 to 6 mole % .

9. A vulcanizable rubber composition according to Claim 6 comprising a processing oil in an amount of 10 to 150 parts by weight per 100 parts by weight of the copolymer rubber.

10. A vulcanizable rubber composition according to Claim 9 comprising an inorganic filler and/or carbon black in an amount of 20 to 400 parts by weight per 100 parts by weight of the copolymer rubber.

11. A vulcanizable rubber composition according to Claim 9 comprising an inorganic filler and/or carbon black in an amount of 40 to 150 parts by weight per 100 parts by weight of the copolymer rubber.

12. A vulcanizable rubber composition according to Claim 6 comprising additionally a conjugated diene polymer and/or a copolymer of a conjugated diene and an $\alpha$-olefin or an aromatic vinyl compound.

13. A vulcanizable rubber composition according to Claim 12 comprising at least one rubber selected from the group consisting of butadiene rubber, isoprene rubber, natural rubber, styrene-butadiene rubber and nitrile-butadiene rubber.

14. A vulcanizable rubber composition according to Claim 12 comprising natural rubber and/or butadiene rubber.

15. A vulcanizable rubber composition according to Claim 12, wherein the content of said conjugated diene polymer and/or copolymer of conjugated diene and $\alpha$-olefin or an aromatic vinyl compound is 1 to 250 parts by weight per 100 parts by weight of the rubbery copolymer.

16. A vulcanizable rubber composition according to Claim 6 comprising an organic peroxide.

17. A vulcanizable rubber composition according to Claim 16, wherein said organic peroxide is at least one member selected from the group consisting of 1,1-bis(t-butylperoxy)-3,3,5-trimethylcyclohexane, dicumyl peroxide, di-t-butylperoxide, t-butylperoxycumene, benzoyl peroxide and 2,5-dimethyl-2,5-di(t-butylperoxy)hexane.

18. A vulcanizable rubber composition according to Claim 16, wherein the content of said organic peroxide is 0.5 to 20 parts by weight per 100 parts by weight of the rubbery copolymer.

19. A vulcanizable rubber composition according to Claim 16, wherein the content of said organic peroxide is 1 to 10 parts by weight per 100 parts by weight of the rubbery copolymer.

**Patentansprüche**

1. Kautschukartiges Copolymer aus Ethylen, Propylen und einem nichtkonjugierten Polyen, wobei das Molverhältnis von Ethylen/Propylen 86/14 bis 97/3 beträgt, der Gesamtanteil des Propylens und des nichtkonjugierten Polyens 6 bis 30 Mol-% betzägt und das Copolymer einen A-Wert, der durch die nachstehende Gleichung definiert ist:

$$A = \frac{42P + 120D}{42P + 120D + 28E}$$

[P, D und E bedeuten jeweils den Anteil (Mol-%) von Propylen, dem nichtkonjugierten Polyen beziehungsweise Ethylen in dem Copolymer] von A ≧ 0,1 besitzt und das Copolymer eine grundmolare Viskositätszahl von 0,8 bis 4,0 dl, gemessen bei 70 °C in Xylol, besitzt, eine Schmelzhöchsttemperatur von 70 ° C oder niedriger und eine Schmelzwärme von 41,8 Joule/g (10 cal/g) oder weniger, mit einem Differentialscanningkalorimeter gemessen, besitzt.

2. Copolymer gemäß Anspruch 1, wobei der Gesamtanteil des Propylens und nichtkonjugierten Polyens 6 bis 17 Mol-% beträgt.

3. Copolymer gemäß Anspruch 1, wobei der A-Wert ≧ 0,12 ist.

4. Copolymer gemäß Anspruch 1, wobei das nichtkonjugierte Polyen 5-Ethyliden-2-norbornen und/oder Dicyclopentadien ist.

5. Copolymer gemäß Anspruch 1, wobei die Schmelzhöchsttemperatuz 65 ° C oder niedriger ist und die Schmelzwärme 6,3 bis 25 Joule/g (1,5 bis 6 cal/g), gemessen mit einem Differentialscanningkalorimeter, beträgt.

6. Vulkanisierbare Kautschukzusammensetzung, umfassend das kautschukartige Copolymer gemäß einem der Ansprüche 1 bis 5.

7. Vulkanisierbare Kautschukzusammensetzung gemäß Anspruch 6, wobei der Anteil des nichtkonjugierten Polyens 0,3 bis 8 Mol-% beträgt.

8. Vulkanisierbare Kautschukzusammensetzung gemäß Anspruch 6, wobei der Anteil des nichtkonjugierten Polyens 3 bis 6 Mol-% beträgt.

9. Vulkanisierbare Kautschukzusammensetzung gemäß Anspruch 6, umfassend ein Weichmacheröl in einer Menge von 10 bis 150 Gew.-Teilen, pro 100 Gew.-Teile des Copolymerkautschuks.

10. Vulkanisierbare Kautschukzusammensetzung gemäß Anspruch 9, umfassend einen anorganischen Füllstoff und/oder Ruß in einer Menge von 20 bis 400 Gew.-Teilen, pro 100 Gew.-Teile des Copolymerkautschuks.

11. Vulkanisierbare Kautschukzusammensetzung gemäß Anspruch 9, umfassend einen anorganischen Füllstoff und/oder Ruß in einer Menge von 40 bis 150 Gew.-Teilen, pro 100 Gew.-Teile des Copolymerkautschuks.

12. Vulkanisierbare Kautschukzusammensetzung gemäß Anspruch 6, zusätzlich umfassend ein konjugiertes Dienpolymer und/oder ein Copolymer eines konjugierten Diens und eines $\alpha$-Olefins oder einer aromatischen Vinylverbindung.

13. Vulkanisierbare Kautschukzusammensetzung gemäß Anspruch 12, umfassend mindestens einen Kautschuk, ausgewählt aus der Gruppe bestehend aus Butadienkautschuk, Isoprenkautschuk, natürlichem Kautschuk, Styrol-Butadien-Kautschuk und Nitril-Butadien-Kautschuk.

14. Vulkanisierbare Kautschukzusammensetzung gemäß Anspruch 12, umfassend natürlichen Kautschuk und/oder Butadienkautschuk.

15. Vulkanisierbare Kautschukzusammensetzung gemäß Anspruch 12, wobei der Anteil des konjugierten Dienpolymers und/oder des Copolymers des konjugierten Diens und des $\alpha$-Olefins oder einer aromatischen Vinylverbindung 1 bis 250 Gew.-Teile, pro 100 Gew.-Teile des elastischen Copolymers, beträgt.

16. Vulkanisierbare Kautschukzusammensetzung gemäß Anspruch 6, umfassend ein organisches Peroxid.

17. Vulkanisierbare Kautschukzusammensetzung gemäß Anspruch 16, wobei das organische Peroxid mindestens eine Verbindung, ausgewählt aus der Gruppe bestehend aus 1,1-Bis(t-butylperoxy)-3,3,5-trimethylcyclohexan, Dicumylperoxid, Di-t-butylperoxid, t-Butylperoxycumen, Benzoylperoxid und 2,5-Dimethyl-2,5-di(t-butylperoxy)hexan, ist.

EP 0 275 925 B1

**18.** Vulkanisierbare Kautschukzusammensetzung gemäß Anspruch 16, wobei der Anteil des organischen Peroxids 0,5 bis 20 Gew.-Teile, pro 100 Gew.-Teile des elastischen Copolymers, beträgt.

**19.** Vulkanisierbare Kautschukzusammensetzung gemäß Anspruch 16, wobei der Anteil des organischen Peroxids 1 bis 10 Gew.-Teile, pro 100 Gew.-Teile des elastischen Copolymers, beträgt.

**Revendications**

**1.** Copolymère caoutchouteux d'éthylène, de propylène et d'un polyène non conjugué, dans lequel le rapport molaire éthylène/propylène est compris entre 86/14 et 97/3, la teneur totale en propylène et en polyène non conjugué est comprise entre 6 et 30% en moles, avec une valeur A, telle que définie par l'équation suivante:

$$A = \frac{42P + 120D}{42P + 120D + 28E}$$

[dans laquelle P, D et E représentent respectivement les teneurs (en % en moles) du copolymère en propylène, en polyène non conjugué et en éthylènel, égale ou supérieure à 0,1, le copolymère ayant une viscosité intrinsèque, mesurée à 70°C dans du xylène, de 0,8 à 4,0 dl/g, une température maximale de fusion de 70°C ou moins et une chaleur de fusion, mesurée avec un calorimètre différentiel, de 41,8 J/g (10 cal/g)ou moins.

**2.** Copolymère selon la revendication 1, dans lequel la teneur totale en propylène et en polyène non conjugué est comprise entre 6 et 17% en moles.

**3.** Copolymère selon la revendication 1, dans lequel la valeur A est ≧ 0,12.

**4.** Copolymère selon la revendication 1, dans lequel ledit polyène non conjugué est le 5-éthylidène-2-norbornène et/ou le dicyclopentadiène.

**5.** Copolymère selon la revendication 1, dans lequel la température maximale de fusion est de 65°C ou moins et la chaleur de fusion, mesurée avec un calorimètre différentiel, est comprise entre 6,3 et 25 J/g (1.5 et 6 cal/g).

**6.** Composition de caoutchouc vulcanisable, comprenant le copolymère caoutchouteux selon l'une quelconque des revendications 1 à 5.

**7.** Composition de caoutchouc vulcanisable selon la revendication 6, dans laquelle la teneur en ledit polyène non conjugué est comprise entre 0,3 et 8% en moles.

**8.** Composition de caoutchouc vulcanisable selon la revendication 6, dans laquelle la teneur en ledit polyène non conjugué est comprise entre 3 et 6% en moles.

**9.** Composition de caoutchouc vulcanisable selon la revendication 6, comprenant une huile plastifiante dans une proportion de 10 à 150 parties en poids pour 100 parties en poids du caoutchouc copolymère.

**10.** Composition de caoutchouc vulcanisable selon la revendication 9, comprenant une charge inorganique et/ou du noir de carbone dans une proportion de 20 à 400 parties en poids pour 100 parties en poids du caoutchouc copolymère.

**11.** Composition de caoutchouc vulcanisable selon la revendication 9, comprenant une charge inorganique et/ou du noir de carbone dans une proportion de 40 à 150 parties en poids pour 100 parties en poids du caoutchouc copolymère.

**12.** Composition de caoutchouc vulcanisable selon la revendication 6, comprenant en plus un polymère de diène conjugué et/ou un copolymère d'un diène conjugué et d'une $\alpha$-oléfine ou d'un composé

37

vinylaromatique.

**13.** Composition de caoutchouc vulcanisable selon la revendication 12, comprenant au moins un caoutchouc choisi dans le groupe du caoutchouc butadiène, du caoutchouc isoprène, du caoutchouc naturel, du caoutchouc styrène/butadiène et du caoutchouc nitrile/butadiène.

**14.** Composition de caoutchouc vulcanisable selon la revendication 12, comprenant du caoutchouc naturel et/ou du caoutchouc butadiène.

**15.** Composition de caoutchouc vulcanisable selon la revendication 12, dans laquelle la teneur en ledit polymère de diène conjugué et/ou copolymère de diène conjugué et d'$\alpha$-oléfine ou de composé vinylaromatique est comprise entre 1 et 250 parties en poids pour 100 parties en poids du copolymère caoutchouteux.

**16.** Composition de caoutchouc vulcanisable selon la revendication 6, comprenant un peroxyde organique.

**17.** Composition de caoutchouc vulcanisable selon la revendication 16, dans laquelle ledit peroxyde organique est au moins un membre choisi dans le groupe constitué par le 1,1-bis(t-butylperoxy)-3,3,5-triméthylcyclohexane, le peroxyde de dicumyle, le peroxyde de di-t-butyle, le t-butylperoxycumène, le peroxyde de benzoyle et le 2,5-diméthyl-2,5-di(t-butylperoxy)hexane.

**18.** Composition de caoutchouc vulcanisable selon la revendication 16, dans laquelle la teneur en ledit peroxyde organique est comprise entre 0,5 et 20 parties en poids pour 100 parties en poids du copolymère caoutchouteux.

**19.** Composition de caoutchouc vulcanisable selon la revendication 16, dans laquelle la teneur en ledit peroxyde organique est comprise entre 1 et 10 parties en poids par 100 parties en poids du copolymère caoutchouteux.

# FIG. I